# EUROPEAN PATENT SPECIFICATION

(11) **EP 2 733 022 B1**
(45) Date of publication and mention of the grant of the patent: **29.04.2015**
(21) Application number: 11767739.3
(22) Date of filing: 15.07.2011
(51) Int. Cl.: B60R 21/09

(54) **CONTROL PEDAL FOR AN AUTOMOTIVE VEHICLE**
BREMSPEDAL FÜR EIN KRAFTFAHRZEUG
PÉDALE DE COMMANDE POUR VÉHICULE AUTOMOBILE

(43) Date of publication of application: 21.05.2014
(73) Proprietor: Flexngate Automotive Iberica, S.A., 08520 Les Franqueses Del Valles (ES)
(72) Inventor: NICOLAS DOMINGO, Joaquin, E-08390 Montgat (ES); GARCIA VILA, Jordi, E-08980 Sant Feliu de Llobregat (ES); BOQUET CARRETERO, Marçal, E-08301 Mataro (ES)
(74) Representative: Sugrañes Patentes y Marcas
(86) International application number: PCT/ES2011/070525
(87) International publication number: WO 2013/011159

(56) References cited:
- EP-A2- 1 582 419
- EP-A2- 1 950 100
- GB-A- 2 389 083
- US-A1- 2007 227 289

## Description

### Technical Sector of the invention,

The invention relates to a control pedal for an automotive vehicle comprising a lever arm structured in two portions attached in an articulated manner and which is provided with means for their mutual coupling and such that both portions can rotate together and simultaneously about a support shaft in normal operating conditions.

The pedal is prepared so that, in the event of a frontal vehicle collision with sufficient magnitude, the second portion of the lever arm, which is the arm intended to receive the push from the foot of the vehicle's driver, can rotate freely with respect to the first portion and is therefore retracted in the direction opposite to the driver.

### Background of the Invention

Patent EP132602 discloses a control pedal for a vehicle comprising a lever arm swiveling about a support shaft, fixed to the vehicle chassis, structured by means of two parts attached in an articulated manner through a hinge.

The first part is finished at its free end with the classic support for supporting the foot of the driver and the second part is provided with a through hole whereby it can be hanged in a swiveling manner about the mentioned support shaft.

The first part has at its upper end a coupling notch of a transverse pin which is displaced in a linear furrow or slit opening of the second part, such that in normal conditions the mentioned pin is housed simultaneously in the furrow and in the notch forming a nexus connecting the first and second parts determining the mentioned lever arm in its rigid form.

The pedal comprises displacement means for displacing the pin throughout the furrow which act in the event of a frontal vehicle collision, such that the pin comes out of the notch of the first part and the latter can swivel with respect to the second part away from the driver.

Said displacement means consist of a rocker assembled in a hinged manner through an intermediate rod on the second part, swiveling about the support shaft, the rocker being finished at one of its ends in the shape of a hook in the body of which the pin is in turn inserted and the other end of which opposes a cam also assembled in a hinged manner on an integral component of the support shaft through a hinge. One end of this cam faces a fixed stop making said cam swivel when the support shaft is displaced, which in turn makes the rocker swivel, causing the displacement of the pin towards the situation of disengagement from the notch of the first part carrying the support for the foot of the driver.

This mechanical solution thus needs two articulated attachments for guiding the displacement of the rocker and of the cam, respectively, which are displaced with respect to the rotation shaft of the lever arm.

On the other hand, the second part assembled in a swiveling manner on the support shaft is a part configured in the shape of a plate the thickness of which is not enough to prevent the application of a rotation moment on the transverse pin traversing the linear furrow or slit when only one of its ends protruding from the furrow is pushed by the hook of the rocker arranged at one side of the plate forming the second part.
Prior art document GB 2 389 083 discloses another example and among other a control pedal (14) for an automotive vehicle comprising a lever arm (18,16) structured in two portions (18,16) attached in an articulated manner and provided with means for their mutual coupling and such that both portions can rotate together and simultaneously about a support shaft in normal operating conditions, whereby
the first portion (16) formed in two parts is yoke-shaped and has two facing arms (16a, 16b) each provided with a through hole in which there is inserted a corresponding bushing 12 linking both arms and allowing the swiveling assembly of said first portion about the support shaft of the pedal, the arms (16a, 16b) of the yoke being provided with a corresponding groove in which there is inserted in a sliding manner a transverse pin extending between the arms of the yoke this first portion 16 further comprising coupling means for the firm coupling of a push-rod for transmitting the rotational movement of the lever arm to a mechanism of the vehicle; and in that
the second portion 18, which has an elongated shape and the lower end (45) of which is intended to receive a push from a user, is attached in an articulated manner to the first portion (16), its upper end being arranged between the arms (16a, 16b) of the yoke forming said first portion,
the pedal further comprising a push lever (36,32) assembled in a rotating manner between the arms (16a, 16b) of the yoke forming the first portion (16) and about the bushing (12), the push lever (36) in turn being provided with a groove traversed by the transverse bushing (12).

The objective of the present invention is a control pedal which solves this drawback, in addition to it being formed by a smaller number of components and being constructively simpler, such that the articulated attachments which have been necessary up until now so that the rocker and the cam can transmit the force necessary to the transverse pin for the displacement thereof during a frontal vehicle collision with sufficient magnitude, can be eliminated.

### Summary of the Invention

The control pedal for an automotive vehicle object of the invention is of those comprising, in a known manner, a lever arm structured in two portions attached in an articulated manner and which is provided with means for their mutual coupling and such that both portions can rotate together and simultaneously about a support shaft in normal operating conditions.

Essentially, the pedal is characterized in that the first portion formed in one or several parts is yoke-shaped and has two facing arms, each provided with a through hole in which there is inserted a corresponding bushing linking both arms and allowing the swiveling assembly of said first portion about the support shaft of the pedal, the arms of the yoke being provided with a corresponding groove in which there is inserted in a sliding manner a transverse pin extending between the arms of the yoke, this first portion further comprising coupling means for the firm coupling of a push-rod for transmitting the rotational movement of the lever arm to a mechanism of the vehicle; and in that the second portion, which has an elongated shape and the lower end of which is intended to receive a push from a user, is attached in an articulated manner to the first portion, its upper end being arranged between the arms of the yoke forming the first portion of the lever arm, the second portion being provided in its upper edge with a coupling notch in which the transverse pin tightly fits in normal operating conditions of the pedal, the transverse pin preventing the rotation of the second portion with respect to the yoke forming the first portion, such that both are displaced together and simultaneously about the support shaft when the second portion is driven by a user, and the pedal further comprising a push lever assembled in a rotating manner between the arms of the yoke forming the first portion and about the bushing, the push lever in turn being provided with a groove traversed by the transverse bushing and said curved groove being configured such that its lower contour acts as a cam, lifting the transverse pin when the push lever is forced to rotate with respect to the yoke and detaching it from the coupling notch of the second portion, thus allowing the free rotation of the latter with respect to the yoke.

According to another feature of the invention, the push lever is also yoke-shaped, the upper end of the second part being arranged between the arms of the yoke forming the push lever, which are in turn arranged between the arms of the yoke forming the first portion of the lever arm. Preferably, the push lever consists of a single part.

In one embodiment, both arms of the yoke forming the push lever are provided with a corresponding groove traversed by the transverse pin.

### Brief Description of the Drawings

An embodiment of the pedal according to the invention has been depicted in the drawings. Specifically:
Figure 1 is a perspective view of a pedal according to the invention under normal operating conditions;
Figure 2 is a view of the pedal of Figure 1 also in normal operating conditions but in which one of the arms of the yoke forming the first portion of the lever arm has not been depicted to show the features of the components which are covered by it; and
Figure 3 is a view of the pedal of Figure 1 during a frontal vehicle collision, in which neither the push lever nor the front arm of the yoke has been depicted.

### Detailed Description of an Embodiment Variant

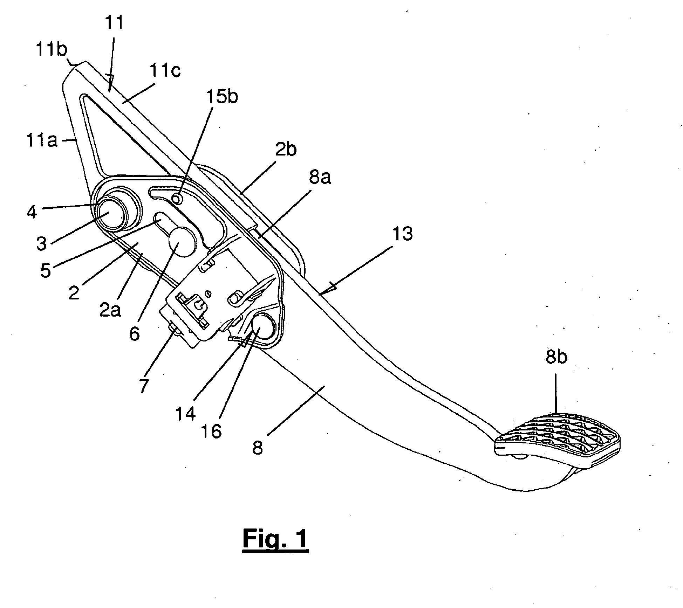

The pedal 1 depicted by way of example in Figure 1 is a pedal suitable for controlling an automotive vehicle, the pedal 1 indistinctly being a brake pedal or a clutch pedal.

The pedal 1 is basically formed by a lever arm 13 structured in two portions 2 and 8 attached in an articulated manner and by a push lever 11 the functionality of which will be explained in detail below.

The first portion 2 of the lever arm 13 is yoke-shaped and has two facing arms 2a, 2b attached to one another by means of a bushing 4 determining a through hole 3 which allows the swiveling assembly of said first portion 2 about a support shaft (not shown) of the pedal 1. It is understood that the arms 2a, 2b of the yoke can be attached by means of a bridge part and the yoke can be formed from a single part or, alternatively, the arms 2a, 2b can be formed by individual parts that remain attached by means of the bushing 4.

In any case, the arms 2a, 2b of the yoke are provided with a corresponding groove 5 of which only the groove of the front arm is visible in the perspective view of Figure 1, in which a transverse pin 6 extending between the arms 2a, 2b of the yoke is inserted in a sliding manner. This transverse pin 6 is conveniently provided at its ends with a widening preventing its extraction from the grooves 5. It should be highlighted that the transverse pin 6 is inserted in the grooves 5 with sufficient clearance to enable sliding it throughout the grooves from the lower end thereof, a situation which is shown in Figure 1, to the opposite end thereof.

It is observed in Figure 1 that the first portion of the lever arm 13 is provided in a known manner with coupling means 7 for the firm coupling of a push-rod, the function of which is to transmit the rotational movement of the lever arm 13 about its support shaft to a mechanism of the vehicle such as a power brake or clutch mechanism.

The second portion 8 of the lever arm 13 is formed by a single part having an elongated shape and the lower end 8b of which has a conventional support intended to receive the push from the foot of a user.

This second portion 8 is attached in an articulated manner to the first portion 2 of the lever arm 13 by means of the articulated attachment 14 comprising a rod 16 acting as a rotation shaft about which the relative movement between the second portion 8 and the first portion 2 of the lever arm can take place provided that the transverse pin 6 does not adopt the position depicted in Figure 1.

It is observed in Figure 1 that the upper end 8a of the second portion 8 of the lever arm 13 is arranged between the arms 2a, 2b of the yoke forming the first portion 2 and reaching the area in which the transverse pin 6 interfering with the mentioned upper end 8a is located, preventing the rotation of the second portion 8 of the lever arm 13 with respect to the yoke.

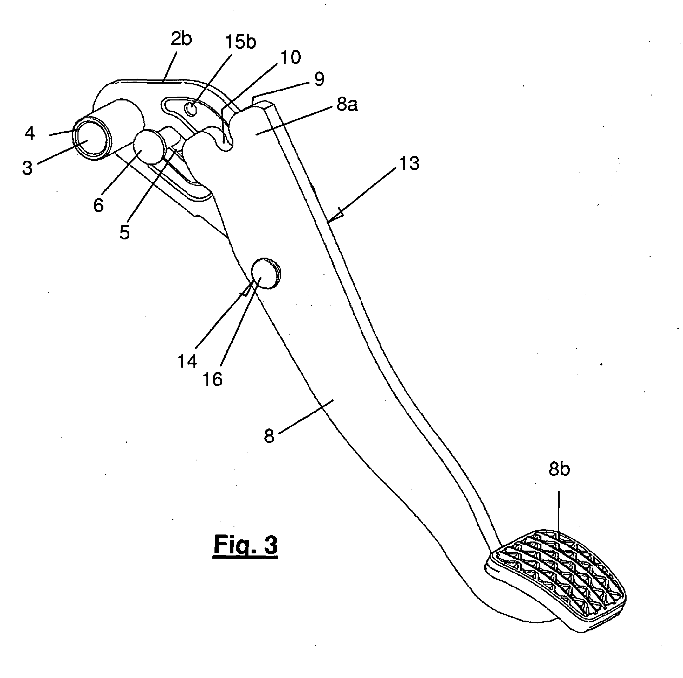

For this purpose, the second portion 8 of the lever arm 13 is provided in its upper edge 9 with a coupling notch 10 (visible in Figure 3) in which the transverse pin 6 tightly fits in normal operating conditions of the pedal 1, preventing as has been mentioned above the rotation of the second portion 8 with respect to the yoke forming the first portion 2 of the lever arm 13 such that both are displaced together and simultaneously about the support shaft when the second portion 8 is driven by a user.

Therefore, in normal operating conditions the two portions 2 and 8 of the lever arm 13 form a block rotating together about the support shaft of the pedal 1.

The pedal 1 comprises in addition to the lever arm 13, a push lever 11 assembled in a rotating manner between the arms 2a, 2b of the yoke forming the first portion 2 about the bushing 4.

This push lever 11 is originally prevented from moving with respect to the yoke forming the first portion 2 of the lever arm 13 by the stop effect of at least one protrusion 15a integral with the body of the push lever against the body of the facing arm 2a of the yoke. In the example of the drawings, the protrusion 15a is made of plastic material and is housed inside a corresponding recess 15b made in the arm 2a of the yoke.

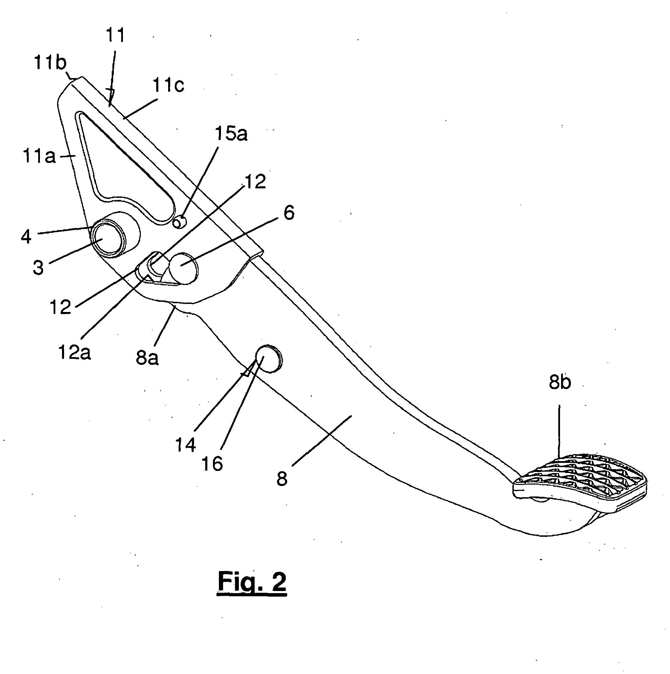

It is observed in Figure 2 that the push lever 11 is formed by a single generally U-shaped part, two branches or arms 11 a and 11 b and a bridge portion 11 c being distinguished therein, each of the arms 11 a, 11b being provided with a groove 12 which are simultaneously traversed by the transverse bushing 6 which also traverses the grooves 5 of the yoke forming the first portion 2 of the lever arm 13. These grooves 12 of which only the groove of the front arm 11a is visible in Figure 2, are configured such that their lower contour 12a acts as a cam, lifting the transverse pin 6 when the push lever 11 is forced to rotate with respect to the yoke and detaching it from the coupling notch 10 of the second portion 8 of the lever arm 13, thus allowing the free rotation of the latter with respect to the yoke, all this as illustrated in Figure 3.

Although not shown in Figure 2, it must be taken into account that the push lever 11 is also yoke-shaped, the upper end 8a of the second part 8 of the lever arm 13 being arranged between the arms 11 a, 11 b of the yoke forming the push lever 11, which are in turn arranged between the arms 2a, 2b of the yoke forming the first portion 2 of the lever arm 13.

The push lever 11 rotates when the upper end of the latter collides into a non-deformable component of the vehicle in the event of a collision with sufficient magnitude causing the displacement of the support block of the pedal 1. In these circumstances the push lever 11 is forced to rotate counter-clockwise, always according to the perspective view of Figure 1, with sufficient force so as to first break the plastic protrusion 15 preventing its rotation and subsequently to displace the transverse pin 6 throughout the grooves 5 of the arms 2a, 2b of the yoke and to release it from the coupling notch 10 of the second portion of the lever arm 13, as illustrated in Figure 3.

In this situation, the second portion 8 of the lever arm 13 can be retracted without opposition away from the driver rotating clockwise about its articulated attachment 14 with the first portion 2 of the lever arm 13 which will remain suspended from the support shaft of the pedal 1.

## Claims

1. A control pedal (1) for an automotive vehicle comprising a lever arm (13) structured in two portions (2, 8) attached in an articulated manner and provided with means for their mutual coupling and such that both portions can rotate together and simultaneously about a support shaft in normal operating conditions, **characterized in that**
the first portion (2) formed in one or several parts is yoke-shaped and has two facing arms (2a, 2b) each provided with a through hole (3) in which there is inserted a corresponding bushing (4) linking both arms and allowing the swiveling assembly of said first portion about the support shaft of the pedal, the arms (2a, 2b) of the yoke being provided with a corresponding groove (5) in which there is inserted in a sliding manner a transverse pin (6) extending between the arms of the yoke, this first portion further comprising coupling means (7) for the firm coupling of a push-rod for transmitting the rotational movement of the lever arm to a mechanism of the vehicle; and **in that**
the second portion (8), which has an elongated shape and the lower end (8b) of which is intended to receive a push from a user, is attached in an articulated manner to the first portion (2), its upper end (8a) being arranged between the arms (2a, 2b) of the yoke forming said first portion, this second portion (8) being provided in its upper edge (9) with a coupling notch (10) in which the transverse pin (6) tightly fits in normal operating conditions of the pedal, the transverse pin (6) preventing the rotation of the second portion (8) with respect to the yoke forming the first portion (2), such that both are displaced together and simultaneously about the support shaft when the second portion (8) is driven by a user,
the pedal further comprising a push lever (11) assembled in a rotating manner between the arms (2a, 2b) of the yoke forming the first portion (2) and about the bushing (4), the push lever (11) in turn being provided with a groove (12) traversed by the transverse bushing (6) and said curved groove (12) being configured such that its lower contour (12a) acts as a cam, lifting the transverse pin (6) when the push lever (11) is forced to rotate with respect to the yoke and detaching it from the coupling notch (10) of the second portion (8), thus allowing the free rotation of the latter with respect to the yoke.

2. The pedal (1) according to claim 1, **characterized in that** the push lever (11) is also yoke-shaped, the upper end (8a) of the second part (8) being arranged between the arms (11 a, 11 b) of the yoke forming the push lever which are in turn arranged between the arms (2a, 2b) of the yoke forming the first portion (2) of the lever arm.

3. The pedal (1) according to claim 2, **characterized in that** the push lever consists of a single part.

4. The pedal (1) according to claim 2 or 3, **characterized in that** both arms (11a, 11 b) of the yoke forming the push lever (11) are provided with a corresponding groove (12) traversed by the transverse pin (6).

## Patentansprüche

1. Steuerpedal (1) für ein Kraftfahrzeug umfassend einen Hebelarm (13), welcher in zwei Teilen (2, 8) gegliedert ist, die gelenkig verbunden sind, und welches mit Mitteln für ihre gegenseitige Kopplung versehen ist und so dass sich beide Teile zusammen und gleichzeitig um eine Stützachse bei normalen Betriebsbedingungen drehen können, **dadurch gekennzeichnet, dass**
der erste Teil (2), der aus einem oder mehreren Stücken gebildet ist, gabelförmig ausgebildet ist und zwei gegenüberliegende Arme (2a, 2b) aufweist, wobei jeder Arm mit einem Durchgangsloch (3) versehen ist, in welches eine entsprechende Buchse (4) eingeführt wird, die beide Arme verbindet und die schwenkbare Montage des genannten ersten Teils de602007002765um die Stützachse des Pedals ermöglicht, wobei die Arme (2a, 2b) der Gabel mit einer entsprechenden Nut (5) versehen sind, in welche ein Querstift (6), der sich zwischen den Armen der Gabel erstreckt, verschiebbar eingeführt wird, wobei dieser erste Teil zusätzlich Kopplungsmittel (7) für die feste Kopplung einer Schubstange für die Übertragung der Drehbewegung des Hebelarms auf einen Mechanismus des Fahrzeugs umfasst; und dass
der zweite Teil (8), der eine gestreckte Form aufweist und dessen untere Ende (8b) für die Aufnahme eines Schubs vonseiten eines Benutzers vorgesehen ist, mit dem ersten Teil (2) gelenkig verbunden ist, wobei sein oberes Ende (8a) zwischen den Armen (2a, 2b) der Gabel, die diesen ersten Teil bildet, angeordnet ist, wobei dieser zweite Teil (8) an seinem oberen Rand (9) mit einer Kopplungskerbe (10) versehen ist, in welche der Querstift (6) bei normalen Betriebsbedingungen des Pedals dicht reinpasst, wobei der Querstift (6) die Drehung des zweiten Teils (8) in Bezug auf die Gabel, die den ersten Teil (2) bildet, verhindert, so dass beide zusammen und gleichzeitig um die Stützachse bewegt werden, wenn der zweite Teil (8) von einem Benutzer betätigt wird,
das Pedal zusätzlich einen Schubhebel (11) umfasst, der zwischen den Armen (2a, 2b) der Gabel, die den ersten Teil (2) bildet, und um die Buchse (4) drehbar montiert ist, wobei der Schubhebel (11) seinerseits mit einer Nut (12) versehen ist, die von der Querbuchse (6) durchquert wird und wobei die genannte bogenförmige Nut (12) so ausgebildet ist, dass ihre untere Kontur (12a) als Nocken wirkt, indem sie den Querstift (6) hebt, wenn der Schubhebel (11) zur Drehung in Bezug auf die Gabel gezwungen wird, und diesen von der Kopplungskerbe (10) des zweiten Teils (8) herausnimmt, wobei auf diese Weise die freie Drehung desselben in Bezug auf die Gabel ermöglicht wird.

2. Pedal (1) nach Anspruch 1, **dadurch gekennzeichnet, dass** der Schubhebel (11) ebenso gabelförmig ist, wobei das obere Ende (8a) des zweiten Stückes (8) zwischen den Armen (11a, 11 b) der Gabel, die den Schubhebel bildet, angeordnet ist, welche ihrerseits zwischen den Armen (2a, 2b) der Gabel, die den ersten Teil (2) des Hebelarms bildet, angeordnet sind.

3. Pedal (1) nach Anspruch 2, **dadurch gekennzeichnet, dass** der Schubhebel aus einem einzigen Stück besteht.

4. Pedal (1) nach Anspruch 2 oder 3, **dadurch gekennzeichnet, dass** beide Arme (11a, 11 b) der Gabel, die den Schubhebel (11) bildet, mit einer entsprechenden Nut (12), die von dem Querstift (6) durchquert wird, versehen sind.

## Revendications

1. Pédale de commande (1) pour un véhicule automobile comprenant un bras de levier (13) structuré en deux portions (2, 8) attachées d'une manière articulée et pourvu de moyens pour leur accouplement mutuel et de manière que les deux portions puissent tourner ensemble et simultanément autour d'un arbre de support dans des conditions opérationnelles normales, **caracterisée en ce que** la première portion (2) formée en une ou plusieurs pièces est sous forme de chape et a deux bras opposés (2a, 2b), chacun pourvu d'un trou traversant (3) dans lequel est insérée une douille (4) correspondante reliant les deux bras et permettant l'assemblage pivotant de ladite première portion autour de l'arbre de support de la pédale, les bras (2a, 2b) de la chape étant pourvus d'une rainure (5) correspondante dans laquelle est inséré d'une manière coulissante une broche transversale (6) s'étendant entre les bras de la chape, cette première portion comprenant en outre des moyens d'accouplement (7) pour l'accouplement solide d'un tige-poussoire transmettant le mouvment de rotation du bras de levier à un mechanisme du véhicule ; et **en ce que**
la deuxième portion (8), qui a une forme allongée et dont l'extremité inférieure (8b) est prévue pour recevoir une pousée de l'utilisateur, est attachée d'une manière articulée à la première portion (2), son extremité supérieure (8a) étant disposée entre les bras (2a, 2b) de la chape formant ladite première portion, cette deuxième portion (8) étant pourvue sur son bord supérieur (9) d'une entaille d'accouplement (10) dans laquelle la broche transversale (6) s'ajuste bien dans des conditions opérationnelles normales de la pédale, la broche transversale (6) évitant la rotation de la deuxième portion (8) par rapport à la chape formant la première portion (2) de manière que toutes les deux sont déplacées ensemble et de manière simultanée autour de l'arbre de support lorsque la deuxième portion (8) est actionnée par un utilisateur,
la pédale comprenant, en outre, un levier de poussée (11) assemblé d'une manière tournante entre les bras (2a, 2b) de la chape formant la première portion (2) et autour de la douille (4), le levier de poussée (11) étant à son tour pourvu d'une rainure (12) traversée par la douille transversale (6) et ladite rainure courbée (12) étant configurée de manière que son contour inferieur (12a) agisse comme une came, en soulevant la broche transversale (6) lorsque le levier de poussée (11) est forcé à tourner autour de la chape et en la détachant de l'entaille d'accouplement (10) de la deuxième portion (8), en permettant ainsi la rotation libre de cette dernière autour de la chape.

2. Pédale (1) selon la revendication 1, **caractérisée en ce que** le levier de poussée (11) est également sous forme de chape, l'extrémité supérieure (8a) de la deuxième pièce (8) étant disposée entre les bras (11 a, 11 b) de la chape formant le levier de poussée qui sont à leur tour disposés entre les bras (2a, 2b) de la chape formant la première portion (2) du bras de levier.

3. Pédale (1) selon la revendication 2, **caractérisée en ce que** le levier de poussée consiste en une seule pièce.

4. Pédale (1) selon la revendication 2 ou 3, **caractérisée en ce que** les deux bras (11 a, 11 b) de la chape formant le levier de poussée (11) sont pourvus d'une rainure (12) correspondante traversé par la broche transversale (6).
